# EUROPEAN PATENT SPECIFICATION

(11) **EP 3 734 823 B1**
(45) Date of publication and mention of the grant of the patent: **18.10.2023**
(21) Application number: 18896930.7
(22) Date of filing: 20.12.2018
(51) Int. Cl.: H02M 1/40, H02M 3/335

(54) **METHOD AND A DEVICE FOR SUPPRESSING MAGNETIC BIAS**
VERFAHREN UND VORRICHTUNG ZUR UNTERDRÜCKUNG DER MAGNETISCHEN VORSPANNUNG
PROCEDE ET DISPOSITIF DE SUPPRESSION DE POLARISATION MAGNETIQUE

(30) Priority: 27.12.2017 CN 201711447998
(43) Date of publication of application: 04.11.2020
(73) Proprietor: ZTE Corporation, Shenzhen, Guangdong 518057 (CN)
(72) Inventor: HU, Yonghui, Shenzhen, Guangdong 518057 (CN); MENG, Qingyuan, Shenzhen, Guangdong 518057 (CN); LU, Zhifeng, Shenzhen, Guangdong 518057 (CN); WANG, Junjie, Shenzhen, Guangdong 518057 (CN)
(74) Representative: Regimbeau
(86) International application number: PCT/CN2018/122304
(87) International publication number: WO 2019/128835

(56) References cited:
- CN-A- 101 247 088
- CN-A- 103 856 062
- CN-A- 106 787 762
- CN-A- 107 204 707
- JP-B2- 4 352 299
- JP-B2- 5 696 898
- JP-B2- 5 861 814
- US-A1- 2016 126 847

## Description

### TECHNICAL FIELD

The present application relates to the technical field of power electronics and, for example, to a method and apparatus for suppressing bias magnet, and a computer-readable storage medium.

### BACKGROUND

In the technical field of power electronics, a direct current-direct current (DC-DC) converter is a circuit that converts a DC power source into another DC power source having a different output characteristic. In practical application, due to differences in switching speeds of switch transistors, differences in delays of drive signals, differences in pulse widths of drive signals in the DC-DC converter and the like, a long-time operation of the DC-DC converter will cause bias magnet of a transformer in the DC-DC converter.

In the related art, a DC blocking capacitor is added into a topological structure of a circuit to eliminate the bias magnet of the transformer, and the DC blocking capacitor is connected in series to a winding of the transformer to block a DC component. Although this scheme is simple, the addition of the DC blocking capacitor increases the complexity of the circuit, which causes difficulty to select the DC blocking capacitor in a high-current scenario, and also increases the size and costs of the converter.

Further relevant technologies are also known from US 2016/126847 A1 which relates to systems, methods, and devices for use with photovoltaic micro-inverters, and CN 101247088 A which relates to a power converter and a magnetic bias adjustment method.

### SUMMARY

Embodiments of the present application provide a method and apparatus for suppressing bias magnet to suppress the bias magnet caused by a long-time operation of a direct current-direct current (DC-DC) converter.

The invention is defined in the independent Claims.

Other aspects may be understood after the drawings and the detailed description are read and understood.

### BRIEF DESCRIPTION OF DRAWINGS

The drawings are provided for a further understanding of the technical solutions of the present application, and constitute a part of the specification. The drawings and the embodiments of the present application are used for explaining the technical solutions of the present application, and not intended to limit the technical solutions of the present application.
FIG. 1 shows a BUCK-BOOST circuit according to the related art;
FIGS. 2(a) ~ 2(c) are schematic diagrams of excitation currents of a transformer in an isolation BUCK-BOOST circuit according to the related art;
FIG. 3 shows another BUCK-BOOST circuit according to the related art;
FIG. 4 is a flowchart of a method for suppressing bias magnet according to an embodiment of the present application;
FIG. 5 is a structural diagram of an apparatus for suppressing bias magnet according to an embodiment of the present application;
FIG. 6 is a structural diagram of another apparatus for suppressing bias magnet according to an embodiment of the present application;
FIG. 7 is a schematic diagram of a sampling point for bus voltages in an isolation BUCK-BOOST circuit according to an application example of the present application;
FIG. 8 is a flowchart of a method for suppressing bias magnet according to an application example of the present application;
FIG. 9 is a schematic diagram of excitation currents of a transformer in an isolation BUCK-BOOST circuit according to an application example of the present application;
FIG. 10 is a schematic diagram of sampling points for bus voltages in an isolation BUCK-BOOST circuit according to an application example of the present application;
FIG. 11 is a schematic diagram of sampling points for bus voltages in an isolation BUCK-BOOST circuit according to an application example of the present application;
FIG. 12 is a schematic diagram of sampling points for bus voltages in an isolation BUCK-BOOST circuit according to an application example of the present application;
FIG. 13 is a schematic diagram of a sampling point for bus voltages in an isolation BUCK-BOOST circuit according to an application example of the present application;
FIG. 14 is a schematic diagram of a sampling point for bus voltages in an isolation BOOST circuit according to an application example of the present application; and
FIG. 15 is a schematic diagram of a sampling point for bus voltages in an isolation BOOST circuit according to an application example of the present application.

### DETAILED DESCRIPTION

Embodiments of the present application will be described hereinafter in detail with reference to the drawings.

The steps illustrated in the flowcharts of the drawings may be performed by, for example, a computer system including a group of computer-executable instructions. Moreover, although logical sequences are illustrated in the flowcharts, the illustrated or described steps may be performed in sequences different from those described herein in some cases.

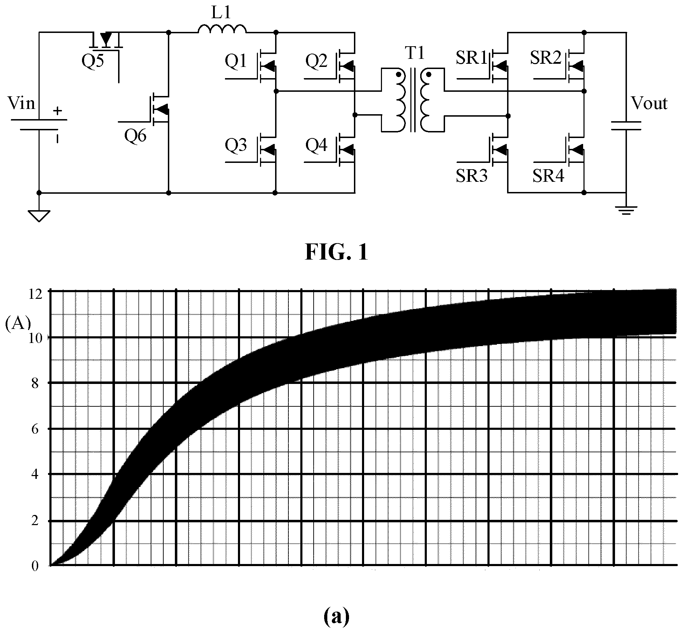

Referring to FIG. 1, FIG. 1 is an isolation BUCK-BOOST circuit according to the related art. In FIG. 1, Vin is an input voltage source, and Q1, Q2, Q3, Q4, Q5 and Q6 are switch transistors. In this example, Q1, Q2, Q3, Q4, Q5 and Q6 are 100 V metal-oxide-semiconductor field-effect transistors (MOSFETs); an inductor L1 is 3 uH; the turns ratio of a transformer T1 is 4: 1; SR1, SR2, SR3 and SR4 are 25 V synchronous rectifier transistors; and Vout is an output voltage. In practical applications, due to differences in switching speeds of the switch transistors Q1, Q2, Q3 and Q4, differences in delays of drive signals, differences in pulse widths of the drive signals, and the like, a long-time operation of the circuit will cause bias magnet of the transformer T1 in the circuit shown in FIG. 1.

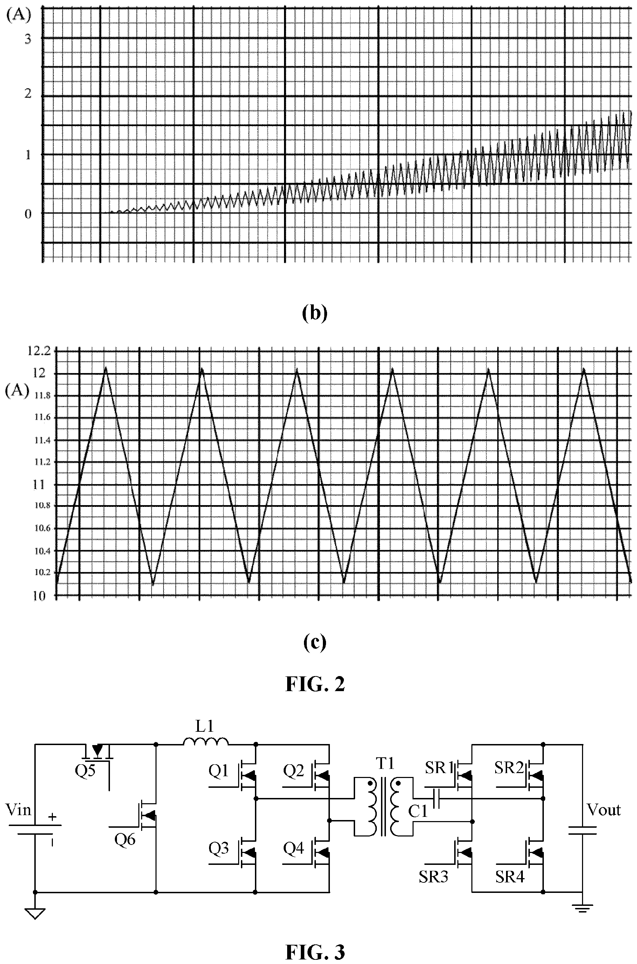

For example, under the condition that the differences in the switching speeds of the switch transistors Q1, Q2, Q3 and Q4 are each 50 ns, excitation currents of the transformer T1 are shown in FIG. 2. Referring to FIG. 2, the excitation currents of the transformer is unidirectionally biased. FIG. 2(a) shows the whole process of the bias magnet of the transformer, where the excitation current of the transformer gradually increases from 0 A to the maximum amplitude 12 A. FIG. 2(b) shows a gradual change process of the initial magnet bias of the excitation currents of the transformer, where the excitation current of the transformer is unidirectionally biased from 0 A. FIG. 2(c) shows that the excitation current of the transformer finally swings steadily between 10-12 A.

Referring to FIG. 3, a DC blocking capacitor C1 is added into the circuit shown in FIG. 3 on the basis of the circuit shown in FIG. 1, and the bias magnet is suppressed by using the DC blocking capacitor C1. Although this scheme is simple, the addition of the DC blocking capacitor increases the complexity of the circuit, which causes difficulty to select the DC blocking capacitor in a high-current scenario, and also increases the size and costs of the converter.

The isolation BUCK-BOOST circuit shown in FIG. 1 is composed of a BUCK circuit and an isolation BOOST circuit. The primary-side full-bridge switches Q1, Q2, Q3 and Q4 of the isolation BOOST circuit each operates with a duty cycle greater than 50%. Within a complete full-bridge switch period, the Q1 and the Q3 are shoot-through, and the Q2 and the Q4 are shoot-through. The inductor L1 stores energy during the two shoot-through time periods. Under the condition that actual on times of the full-bridge switches Q1, Q2, Q3 and Q4 are inconsistent, the two shoot-through time periods are inconsistent. That is, the time periods for the inductor L1 to store energy in two times within one full-bridge switch period are inconsistent so that bus voltages are different within the full-bridge switch period. Therefore, if the bus voltages are the same within one full-bridge switch period, actual on times of the Q1, Q2, Q3 and Q4 are consistent, and volt-seconds of the transformer T1 are consistent, then the bias magnet of the transformer T1 does not exist.

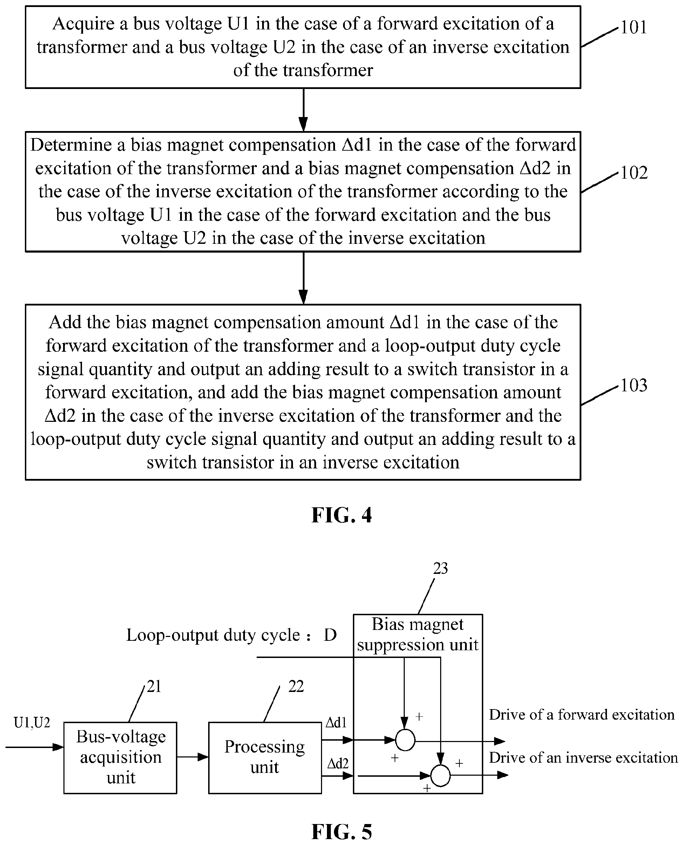

As shown in FIG. 4, an embodiment of the present application provides a method for suppressing bias magnet. The method is used for suppressing bias magnet in a DC-DC converter that has an isolation transformer. The method includes steps 101, 102 and 103.

In step 101, a bus voltage U1 in the case of a forward excitation of the transformer in the DC-DC converter and a bus voltage U2 in the case of an inverse excitation of the transformer in the DC-DC converter are acquired.

The U1 and the U2 may be acquired by sampling the bus voltage U1 in the case of the forward excitation of the transformer and the bus voltage U2 in the case of the inverse excitation of the transformer within the same switch period.

A voltage detection circuit may be implemented by using a common voltage sampling circuit. The bus-voltage sampling is usually performed for a direct current bus voltage, and there is no special requirement for the sampling time. However, in this embodiment of the present application, the bus-voltage sampling is performed for the bus voltage U1 in the case of the forward excitation of the transformer and the bus voltage U2 in the case of the inverse excitation of the transformer, and the bus voltage is a periodic pulse, so the sampling times of the voltages are matched with the times of the forward excitation of the transformer and the inverse excitation of the transformer, and the bus voltage U1 in the case of the forward excitation of the transformer and the bus voltage U2 in the case of the inverse excitation of the transformer are respectively sampled within a switch period.

In an implementation, the U1 and the U2 may be acquired in the following manner: after a drive of the forward excitation is turned on during the forward excitation, a bus voltage is sampled after Δt and recorded as the U1; after a drive of the inverse excitation is turned on during the inverse excitation, a bus voltage is sampled after Δt and recorded as the U2. The U1 is sampled in the case of the forward excitation within each switch period, and the U2 is also sampled in the case of the inverse excitation within each switch period. Since the forward excitation and the inverse excitation separately occupies half of the switch period, the sampling time of the bus voltage U1 in the case of the forward excitation may be set at the middle time of the forward excitation, and the sampling time of the bus voltage U2 in the case of the inverse excitation may be set at the middle time of the inverse excitation. That is Δt ≈ 0.25T, where T is the switch period.

In an implementation, the bus voltage U1 in the case of the forward excitation of the transformer and the bus voltage U2 in the case of the inverse excitation of the transformer are acquired by one of: sampling a full-bridge bus of an isolation BOOST circuit in the DC-DC converter; sampling a midpoint of a primary-side full-bridge leg of the isolation BOOST circuit in the DC-DC converter; sampling a midpoint of a secondary-side full-bridge leg of the isolation BOOST circuit in the DC-DC converter; sampling two ends of an additional winding of the transformer in the DC-DC converter; or sampling a midpoint of two primary-side coils of the transformer in the DC-DC converter.

The DC-DC converter may be an isolation BUCK-BOOST circuit or an isolation BOOST circuit. Under the condition that the DC-DC converter is the isolation BUCK-BOOST circuit, the DC-DC converter includes a BUCK circuit and an isolation BOOST circuit.

In step 102, a bias magnet compensation Δd1 in the case of the forward excitation of the transformer and a bias magnet compensation Δd2 in the case of the inverse excitation of the transformer are determined according to the bus voltage U1 in the case of the forward excitation and the bus voltage U2 in the case of the inverse excitation.

In an implementation, a voltage difference ΔU1 between the forward excitation of the transformer and the inverse excitation of the transformer is obtained according to the bus voltage U1 in the case of the forward excitation and the bus voltage U2 in the case of the inverse excitation, where ΔU1 = U1 - U2. A compensation information amount ΔU3 is determined according to the voltage difference ΔU1 between the forward excitation of the transformer and the inverse excitation of the transformer. In an implementation, at least one of amplification, filtering or clipping may be performed on the voltage difference ΔU1 between the forward excitation of the transformer and the inverse excitation of the transformer to obtain the compensation information amount ΔU3.

The amplification may include multiplying the ΔU1 by a coefficient K to obtain a ΔU2. The coefficient K is generally greater than or equal to 1, and may be selected according to the calculation and measurement accuracy. The filtering may include averaging multiple values of the ΔU2 to obtain the ΔU3. The clipping may include limiting the maximum value or minimum value of the ΔU3.

The bias magnet compensation amount Δd1 in the case of the forward excitation of the transformer and the bias magnet compensation amount Δd2 in the case of the inverse excitation of the transformer are determined according to the compensation information amount ΔU3.

This may be, but is not limited to being, performed by following manners: the Δd1 and the Δd2 are set to specific values based on determining that an absolute value of the compensation information amount ΔU3 is greater than a first threshold value; the Δd1 and the Δd2 are kept unchanged based on determining that the absolute value of the compensation information amount ΔU3 is less than or equal to a second threshold value; the Δd2 is decreased or the Δd1 is increased based on determining that the compensation information amount ΔU3 is less than or equal to the first threshold value and greater than the second threshold value; or the Δd1 is decreased or the Δd2 is increased based on determining that the compensation information amount ΔU3 is greater than or equal to a negative first threshold value and less than a negative second threshold value. The first threshold value is greater than the second threshold value.

The first threshold value and the second threshold value may be selected according to actual conditions. Under the condition that the absolute value of the compensation information amount ΔU3 is greater than the first threshold value, it may be considered that the circuit is in an abnormal state, a reasonable adjustment cannot be performed, and power abnormality alarm information may be outputted. The power abnormality alarm information may be at least one of an alarm lamp, an alarm tone, an alarm box outputted on a screen or other modes. The specified value may be a preset value, for example, 0.

Under the condition that the absolute value of the compensation information amount ΔU3 is less than or equal to the second threshold value, it may be considered that a magnetic flux compensation is balanced and does not need to be adjusted, and then, the Δd1 and the Δd2 are kept unchanged.

Under the condition that the absolute value of the compensation information amount ΔU3 is greater than the second threshold value and less than or equal to the first threshold value, corresponding adjustments may be, but are not limited to being, performed by following manners: the Δd1 is set to 0 ns and the Δd2 minus a compensation adjustment amount is set based on determining that the compensation information amount ΔU3 is less than or equal to the first threshold value and greater than the second threshold value, and the Δd2 is greater than 0 ns; the Δd1 plus the compensation adjustment amount is set and the Δd2 is set to 0 ns based on determining that the compensation information amount ΔU3 is less than or equal to the first threshold value and greater than the second threshold value, the Δd2 is less than or equal to 0 ns, and the Δd1 is less than a maximum adjustment amount; the Δd1 minus the compensation adjustment amount is set and the Δd2 is set to 0 ns based on determining that the compensation information amount ΔU3 is greater than or equal to the negative first threshold value and less than the negative second threshold value, and the Δd1 is greater than 0 ns; or the Δd1 is set to 0 ns and the Δd2 plus the compensation adjustment amount is set based on determining that the compensation information amount ΔU3 is greater than or equal to the negative first threshold value and less than the negative second threshold value, the Δd1 is less than or equal to 0 ns, and the Δd2 is less than the maximum adjustment amount.

The maximum adjustment amount is the maximum adjustable value of the bias magnet compensation amounts Δd1 and Δd2, and may be set according to actual conditions.

Additionally, some special cases may also exist. For example, under the condition that the Δd1 or the Δd2 has been adjusted to the maximum adjustment amount and can no longer be adjusted, the Δd1 and the Δd2 are kept unchanged. For example, the Δd1 and the Δd2 are kept unchanged based on determining that the compensation information amount ΔU3 is less than or equal to the first threshold value and greater than the second threshold value, the Δd2 is equal to 0 ns, and the Δd1 is equal to the maximum adjustment amount. For example, the Δd1 and the Δd2 are kept unchanged based on determining that the compensation information amount ΔU3 is greater than or equal to the negative first threshold value and less than the negative second threshold value, the Δd1 is equal to 0 ns and the Δd2 is equal to the maximum adjustment amount.

In step 103, the bias magnet compensation amount Δd1 in the case of the forward excitation of the transformer and a loop-output duty cycle signal quantity of the DC-DC converter are added, and an adding result is outputted to a switch transistor in a forward excitation; and the bias magnet compensation amount Δd2 in the case of the inverse excitation of the transformer and the loop-output duty cycle signal quantity of the DC-DC converter are added, and an adding result is outputted to a switch transistor in an inverse excitation.

In this embodiment of the present application, the bus voltage in the case of the forward excitation of the transformer and the bus voltage in the case of the inverse excitation of the transformer are acquired to obtain the bias magnet compensation amount in the case of the forward excitation of the transformer and the bias magnet compensation amount in the case of the inverse excitation of the transformer, and then the duty cycle signal quantity is compensated. This method is simple and can effectively suppress the bias magnet of the transformer. Moreover, in this embodiment of the present application, it is not necessary to add elements such as a capacitor to the DC-DC converter, thereby avoiding increasing the complexity of the circuit and the size of the DC-DC converter.

It is to be noted that, for a traditional manner of acquiring a DC bus voltage, merely an average voltage of the DC bus voltages can be acquired, and the targeted compensation cannot be performed on switch transistors corresponding to the forward excitation and the inverse excitation. However, in this embodiment of the present application, the bus voltage in the case of the forward excitation of the transformer and the bus voltage in the case of the inverse excitation of the transformer are acquired. Compared with the traditional manner of acquiring the DC bus voltage, the bus voltages acquired in this embodiment of the present application are switch periodic pulses, voltage sampling points are different, and voltage sampling times are different. Moreover, the bus voltage U1 in the case of the forward excitation of the transformer and the bus voltage U2 in the case of the inverse excitation of the transformer which are respectively sampled within one switch period are instantaneous voltage values, so that more accurate data can be obtained, and compensations can be respectively performed on the switch transistor corresponding to the forward excitation and the switch transistor corresponding to the inverse excitation.

An embodiment of the present application further provides an apparatus for suppressing bias magnet. The apparatus is configured to implement the embodiment and implementations described above. What has been described will not be repeated. As used below, the term "unit" may be at least one of software, hardware or a combination thereof capable of implementing predetermined functions. The apparatus in the embodiment described below may be implemented by software, hardware or a combination of software and hardware.

As shown in FIG. 5, this embodiment of the present application provides an apparatus for suppressing bias magnet. The apparatus includes a bus-voltage acquisition unit 21, a processing unit 22 and a bias magnet suppression unit 23.

The bus-voltage acquisition unit 21 is configured to acquire a bus voltage U1 in the case of a forward excitation of a transformer and a bus voltage U2 in the case of an inverse excitation of the transformer.

The processing unit 22 is configured to determine a bias magnet compensation amount Δd1 in the case of the forward excitation of the transformer and a bias magnet compensation amount Δd2 in the case of the inverse excitation of the transformer according to the bus voltage U1 in the case of the forward excitation and the bus voltage U2 in the case of the inverse excitation.

The bias magnet suppression unit 23 is configured to add the bias magnet compensation Δd1 in the case of the forward excitation of the transformer and a loop-output duty cycle signal quantity of the DC-DC converter and output an adding result to a switch transistor in a forward excitation, and add the bias magnet compensation Δd2 in the case of the inverse excitation of the transformer and the loop-output duty cycle signal quantity of the DC-DC converter and output an adding result to a switch transistor in an inverse excitation.

In an implementation, the bus-voltage acquisition unit 21 is configured to acquire the bus voltage U1 in the case of the forward excitation of the transformer and the bus voltage U2 in the case of the inverse excitation of the transformer by one of: sampling a full-bridge bus of an isolation BOOST circuit; sampling a midpoint of a primary-side full-bridge leg of the isolation BOOST circuit; sampling a midpoint of a secondary-side full-bridge leg of the isolation BOOST circuit; sampling two ends of an additional winding of the transformer; or sampling a midpoint of two primary-side coils of the transformer.

In an implementation, the processing unit 22 is configured to obtain a voltage difference ΔU1 between the forward excitation of the transformer and the inverse excitation of the transformer according to the bus voltage U1 in the case of the forward excitation and the bus voltage U2 in the case of the inverse excitation; determine a compensation information amount ΔU3 according to the voltage difference ΔU1 between the forward excitation of the transformer and the inverse excitation of the transformer; and determine the bias magnet compensation amount Δd1 in the case of the forward excitation of the transformer and the bias magnet compensation amount Δd2 in the case of the inverse excitation of the transformer according to the compensation information amount ΔU3.

In an implementation, the processing unit 22 is configured to perform at least one of amplification, filtering or clipping on the voltage difference ΔU1 between the forward excitation of the transformer and the inverse excitation of the transformer to obtain the compensation information amount ΔU3.

In an implementation, the processing unit 22 is configured to decrease the Δd2 or increase the Δd1 based on determining that the compensation information amount ΔU3 is less than or equal to a first threshold value and greater than a second threshold value; decrease the Δd1 or increase the Δd2 based on determining that the compensation information amount ΔU3 is greater than or equal to a negative first threshold value and less than a negative second threshold value; keep the Δd1 and the Δd2 unchanged based on determining that an absolute value of the compensation information amount ΔU3 is less than or equal to the second threshold value; and set the Δd1 and the Δd2 to specific values based on determining that the absolute value of the compensation information amount ΔU3 is greater than the first threshold value. The first threshold value is greater than the second threshold value.

In an implementation, the apparatus further includes an output unit. The output unit is configured to output power abnormality alarm information based on the processing unit 22 determining that the absolute value of the compensation information amount ΔU3 is greater than the first threshold value.

In an implementation, the processing unit 22 is configured to set the Δd1 to 0 ns and set the Δd2 minus a compensation adjustment amount based on determining that the compensation information amount ΔU3 is less than or equal to the first threshold value and greater than the second threshold value, and the Δd2 is greater than 0 ns.

In an implementation, the processing unit 22 is configured to set the Δd1 plus the compensation adjustment amount and set the Δd2 to 0 ns based on determining that the compensation information amount ΔU3 is less than or equal to the first threshold value and greater than the second threshold value, the Δd2 is less than or equal to 0 ns, and the Δd1 is less than a maximum adjustment amount.

In an implementation, the processing unit 22 is configured to set the Δd1 minus the compensation adjustment amount and set the Δd2 to 0 ns based on determining that the compensation information amount ΔU3 is greater than or equal to a negative first threshold value and less than a negative second threshold value, and the Δd1 is greater than 0 ns.

In an implementation, the processing unit 22 is configured to set the Δd1 to 0 ns and set the Δd2 plus the compensation adjustment amount based on determining that the compensation information amount ΔU3 is greater than or equal to the negative first threshold value and less than the negative second threshold value, the Δd1 is less than or equal to 0 ns, and the Δd2 is less than the maximum adjustment amount.

In this embodiment of the present application, the bus voltage in the case of the forward excitation of the transformer and the bus voltage in the case of the inverse excitation of the transformer are acquired to obtain the bias magnet compensation amount in the case of the forward excitation of the transformer and the bias magnet compensation amount in the case of the inverse excitation of the transformer, and then the duty cycle signal quantity is compensated. This method is simple and can effectively suppress the bias magnet of the transformer. Moreover, in this embodiment of the present application, it is not necessary to add elements such as a capacitor to the DC-DC converter, thereby avoiding increasing the complexity of the circuit and the size of the DC-DC converter.

An embodiment of the present application further provides another apparatus for suppressing bias magnet. The apparatus is configured to implement the embodiments and implementations described above. What has been described will not be repeated.

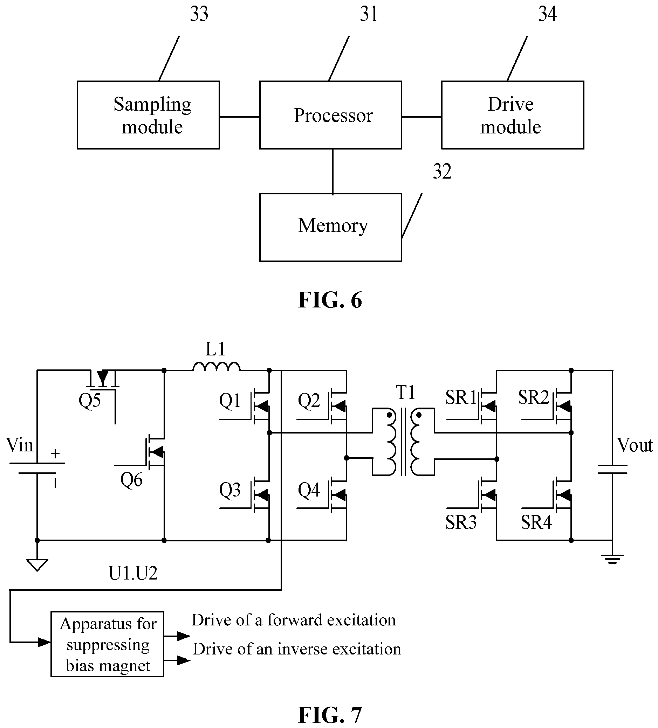

As shown in FIG. 6, this embodiment of the present application provides another apparatus for suppressing bias magnet. The apparatus includes a processor 31, a memory 32, a sampling module 33 and a drive module 34.

The memory 32 is configured to store instructions executable by the processor. The sampling module 33 is configured to sample a bus voltage according to control of the processor. The drive module 34 is configured to perform excitation drive on a switch transistor according to the control of the processor.

The processor 31 is configured to perform the following operations: acquiring a bus voltage U1 in the case of a forward excitation of a transformer and a bus voltage U2 in the case of an inverse excitation of the transformer; determining a bias magnet compensation amount Δd1 in the case of the forward excitation of the transformer and a bias magnet compensation amount Δd2 in the case of the inverse excitation of the transformer according to the bus voltage U1 in the case of the forward excitation and the bus voltage U2 in the case of the inverse excitation; and adding the bias magnet compensation amount Δd1 in the case of the forward excitation of the transformer and a loop-output duty cycle signal quantity of the DC-DC converter and output an adding result to a switch transistor in a forward excitation, and adding the bias magnet compensation amount Δd2 in the case of the inverse excitation of the transformer and the loop-output duty cycle signal quantity of the DC-DC converter and output an adding result to a switch transistor in an inverse excitation.

In an implementation, the sampling module 33 is configured to acquire the bus voltage U1 in the case of the forward excitation of the transformer and the bus voltage U2 in the case of the inverse excitation of the transformer by one of: sampling a full-bridge bus of an isolation BOOST circuit in the DC-DC converter; sampling a midpoint of a primary-side full-bridge leg of the isolation BOOST circuit in the DC-DC converter; sampling a midpoint of a secondary-side full-bridge leg of the isolation BOOST circuit in the DC-DC converter; sampling two ends of an additional winding of the transformer in the DC-DC converter; or sampling a midpoint of two primary-side coils of the transformer in the DC-DC converter.

In an implementation, the processor 31 is configured to perform the following operations: obtaining a voltage difference ΔU1 between the forward excitation of the transformer and the inverse excitation of the transformer according to the bus voltage U1 in the case of the forward excitation and the bus voltage U2 in the case of the inverse excitation; determining a compensation information amount ΔU3 according to the voltage difference ΔU1 between the forward excitation of the transformer and the inverse excitation of the transformer; and determining the bias magnet compensation amount Δd1 in the case of the forward excitation of the transformer and the bias magnet compensation amount Δd2 in the case of the inverse excitation of the transformer according to the compensation information amount ΔU3.

In an implementation, the processor 31 is configured to perform at least one of amplification, filtering or clipping on the voltage difference ΔU1 between the forward excitation of the transformer and the inverse excitation of the transformer to obtain the compensation information amount ΔU3.

In an implementation, the processor 31 is configured to perform the following operations: decreasing the Δd2 or increasing the Δd1 based on determining that the compensation information amount ΔU3 is less than or equal to a first threshold value and greater than a second threshold value; decreasing the Δd1 or increasing the Δd2 based on determining that the compensation information amount ΔU3 is greater than or equal to a negative first threshold value and less than a negative second threshold value; keeping the Δd2 and the Δd1 unchanged based on determining that an absolute value of the compensation information amount ΔU3 is less than or equal to the second threshold value; and setting the Δd1 and the Δd2 to specific values based on determining that the absolute value of the compensation information amount ΔU3 is greater than the first threshold value. The first threshold value is greater than the second threshold value.

In an implementation, the apparatus for suppressing bias magnet further includes an output unit. The output unit is configured to output power abnormality alarm information based on the processor 31 determining that the absolute value of the compensation information amount ΔU3 is greater than the first threshold value.

In an implementation, the processor 31 is configured to perform the following operations: setting the Δd1 to 0 ns and setting the Δd2 minus a compensation adjustment amount based on determining that the compensation information amount ΔU3 is less than or equal to the first threshold value and greater than the second threshold value, and the Δd2 is greater than 0 ns.

In an implementation, the processor 31 is configured to perform the following operations: setting the Δd1 plus the compensation adjustment amount and setting the Δd2 to 0 ns based on determining that the compensation information amount ΔU3 is less than or equal to the first threshold value and greater than the second threshold value, the Δd2 is less than or equal to 0 ns, and the Δd1 is less than a maximum adjustment amount.

In an implementation, the processor 31 is configured to perform the following operations: setting the Δd1 minus the compensation adjustment amount and setting the Δd2 to 0 ns based on determining that the compensation information amount ΔU3 is greater than or equal to a negative first threshold value and less than a negative second threshold value, and the Δd1 is greater than 0 ns.

In an implementation, the processor 31 is configured to perform the following operations: setting the Δd1 to 0 ns and setting the Δd2 plus the compensation adjustment amount based on determining that the compensation information amount ΔU3 is greater than or equal to the negative first threshold value and less than the negative second threshold value, the Δd1 is less than or equal to 0 ns, and the Δd2 is less than the maximum adjustment amount.

In this embodiment of the present application, the bus voltage in the case of the forward excitation of the transformer and the bus voltage in the case of the inverse excitation of the transformer are acquired to obtain the bias magnet compensation amount in the case of the forward excitation of the transformer and the bias magnet compensation amount in the case of the inverse excitation of the transformer, and then the duty cycle signal quantity is compensated. This method is simple and can effectively suppress the bias magnet of the transformer.

The present application will be described in detail below by taking the isolation BUCK-BOOST circuit shown in FIG. 1 as an example.

As shown in FIG. 7, an apparatus for suppressing bias magnet samples a full-bridge bus of an isolation BOOST circuit in an isolation BUCK-BOOST circuit to obtain a bus voltage U1 in the case of a forward excitation of a transformer and a bus voltage U2 in the case of an inverse excitation of the transformer, determines a bias magnet compensation amount Δd1 in the case of the forward excitation of the transformer and a bias magnet compensation amount Δd2 in the case of the inverse excitation of the transformer, and adds the bias magnet compensation amounts and a duty cycle signal quantity to suppress DC bias magnet of the transformer. For example, if switch transistors Q1 and Q4 are the switch transistors corresponding to the forward excitation, and switch transistors Q2 and Q3 are the switch transistors corresponding to the inverse excitation, the Δd1 is used for bias magnet compensation of the Q1 and the Q4, and the Δd2 is used for bias magnet compensation of the Q2 and the Q3.

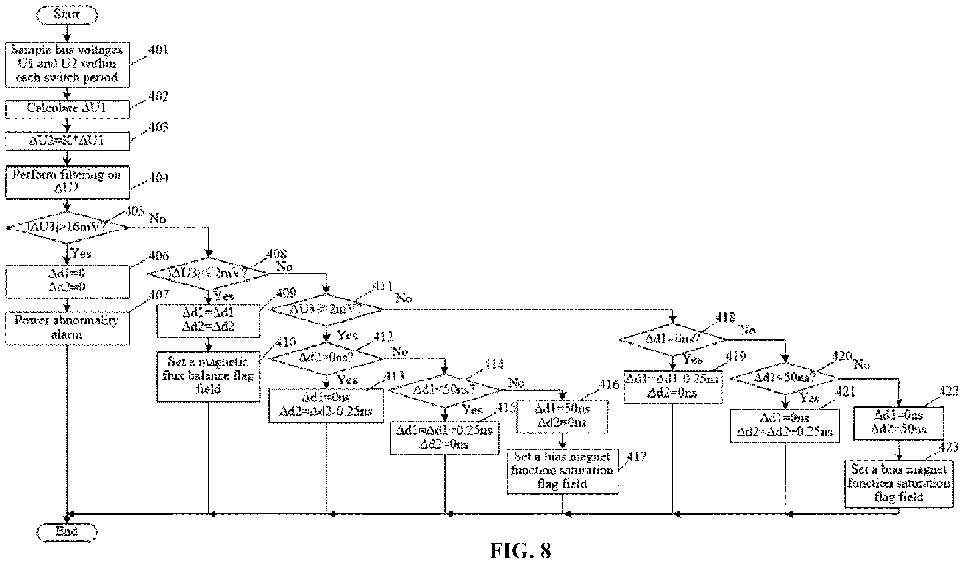

As shown in FIG. 8 in conjunction with FIG. 7, in the method for suppressing bias magnet in this application example, differences in switching speeds of the switch transistors Q1, Q2, Q3 and Q4 are each 50 ns, a first threshold value is set to 16 mV, a second threshold value is set to 2 mV, a compensation adjustment amount is set to 0.25 ns, and a maximum adjustment amount is set to 50 ns. The method includes steps 401 to 423.

In step 401, the bus voltage U1 in the case of the forward excitation of the transformer and the bus voltage U2 in the case of the inverse excitation of the transformer within each switch period are acquired.

A switch period is T. After a drive of the forward excitation is turned on during the forward excitation, a bus voltage is sampled after Δt (Δt ≈ 0.25T) and recorded as the U1. After a drive of the inverse excitation is turned on during the inverse excitation, a bus voltage is sampled after Δt and recorded as the U2.

In step 402, a voltage difference ΔU1 between the forward excitation of the transformer and the inverse excitation of the transformer is calculated, where ΔU1 = U1 - U2.

In step 403, amplification is performed on the voltage difference ΔU1 between the forward excitation of the transformer and the inverse excitation of the transformer to obtain ΔU2, where ΔU2 = K ^{∗} ΔU1 and K is greater than or equal to 1.

In step 404, moving filtering is performed on the ΔU2 to obtain ΔU3.

In step 405, it is determined whether an absolute value of the ΔU3 is greater than the first threshold value 16 mV, step 406 is performed based on a determination result that the absolute value of the ΔU3 is greater than the first threshold value 16 mV, and step 408 is performed based on a determination result that the absolute value of the ΔU3 is less than or equal to the first threshold value 16 mV.

In step 406, it is determined that the power supply is abnormal, and the bias magnet compensation amounts Δd1 and Δd2 are set to 0.

In this step, the bias magnet compensation amounts Δd1 and Δd2 may also be set to other specified values.

In step 407, a power abnormality alarm is outputted, and the process ends.

For example, the alarm may be at least one of an alarm lamp, an alarm tone, an alarm box outputted on a screen or other modes.

In step 408, it is determined whether the absolute value of the ΔU3 is less than the second threshold value 2 mV, step 409 is performed based on a determination result that the absolute value of the ΔU3 is less than the second threshold value 2 mV, and step 411 is performed based on a determination result that the absolute value of the ΔU3 is greater than or equal to the second threshold value 2 mV.

In step 409, it is determined that the power supply operates in a magnetic flux balance state at this time, and drives of the forward excitation and the inverse excitation do not need to be compensated.

In step 410, a magnetic flux balance flag is set, where the flag indicates that the power supply operates in the magnetic flux balance state.

In step 411, it is determined whether the ΔU3 is greater than or equal to the second threshold value 2 mV, step 412 is performed based a determination result that the ΔU3 is greater than or equal to the second threshold value 2 mV, and step 418 is performed based on a determination result that the ΔU3 is less than the second threshold value 2 mV.

In step 412, it is determined whether the Δd2 is greater than 0 ns, step 413 is performed based on a determination result that the Δd2 is greater than 0 ns, and step 414 is performed based on a determination result that the Δd2 is less than or equal to 0 ns.

In step 413, the Δd1 is set to 0 ns, the Δd2 minus the compensation adjustment amount is set, that is, Δd2 = Δd2 - 0.25 ns, and the process ends.

In step 414, it is determined whether the Δd1 is less than the maximum adjustment amount 50 ns, step 415 is performed based on a determination result that the Δd1 is less than the maximum adjustment amount 50 ns, and step 416 is performed based on a determination result that the Δd1 is greater than or equal to the maximum adjustment amount 50 ns.

In step 415, the Δd1 plus the compensation adjustment amount is set, that is, Δd1 = Δd1 + 0.25 ns, the Δd2 is set to 0 ns, and the process ends.

In step 416, the Δd1 is set to the maximum adjustment amount 50 ns, and the Δd2 is set to 0 ns. In this case, the Δd1 has been adjusted to the maximum adjustment amount and can no longer be adjusted.

In step 417, the magnetic flux balance function has reached a limit, the magnetic flux balance is no longer compensated, a bias magnet function saturation flag is set, and the process ends.

In step 418, it is determined whether the Δd1 is greater than 0 ns, step 419 is performed based on a determination result that the Δd1 is greater than 0 ns, and step 420 is performed based on a determination result that the Δd1 is less than or equal to 0 ns.

In step 419, the Δd1 minus the compensation adjustment amount is set, that is, Δd1 = Δd1 - 0.25 ns, and the Δd2 is set to 0 ns.

In step 420, it is determined whether the Δd2 is less than the maximum adjustment amount 50 ns, step 421 is performed based on a determination result that the Δd2 is less than the maximum adjustment amount 50 ns, and step 422 is performed based on a determination result that the Δd2 is greater than or equal to the maximum adjustment amount 50 ns.

In step 421, the Δd1 is set to 0 ns, the Δd2 plus the compensation adjustment amount is set, that is, Δd2 = Δd2 + 0.25 ns, and the process ends.

In step 422, the Δd1 is set to 0 ns, and the Δd2 is set to the maximum adjustment amount 50 ns. In this case, the Δd2 has been adjusted to the maximum adjustment amount and can no longer be adjusted.

In step 423, the magnetic flux balance function has reached a limit, the magnetic flux balance is no longer compensated, the bias magnet function saturation flag is set, and the process ends.

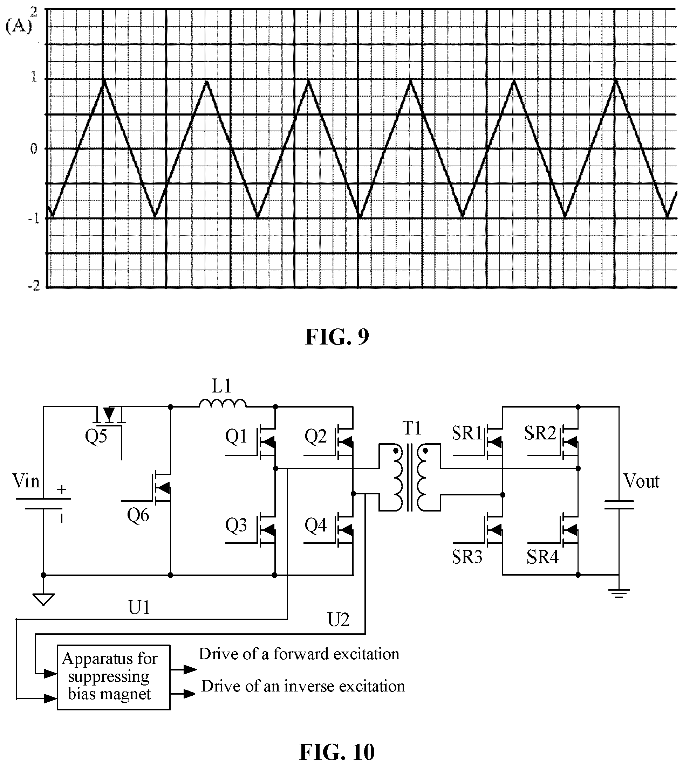

FIG. 9 is a schematic diagram of excitation currents of a transformer in an isolation BUCK-BOOST circuit for suppressing bias magnet by adopting FIGS. 7 and 8. It can be seen from FIG. 9 that the positive amplitude and the negative amplitude of the excitation currents of the transformer are symmetric relative to the zero point, and the amplitudes are positive 1 A and negative 1 A respectively. Compared with the excitation currents between 10-12 A in FIG. 2 where the transformer of the present application is not used, the excitation currents of the transformer are effectively suppressed.

In FIG. 7, a sampling point is on a full-bridge bus of the isolation BOOST circuit. In other embodiments, the bus voltage U1 in the case of the forward excitation of the transformer and the bus voltage U2 in the case of the inverse excitation of the transformer may be obtained by sampling other positions.

For example, as shown in FIG. 10, voltage sampling points are midpoints of primary-side full-bridge legs of the isolation BOOST circuit. In this case, the bus voltage U1 in the case of the forward excitation of the transformer and the bus voltage U2 in the case of the inverse excitation of the transformer within one full-bridge switch period may be respectively sampled at the two midpoints.

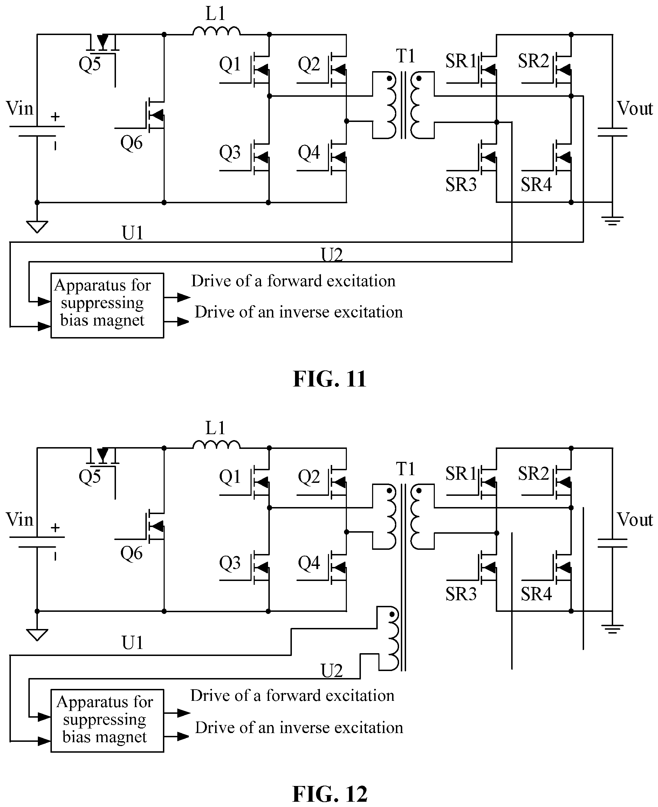

As shown in FIG. 11, voltage sampling points are midpoints of secondary-side full-bridge legs of the isolation BOOST circuit. In this case, the bus voltage U1 in the case of the forward excitation of the transformer and the bus voltage U2 in the case of the inverse excitation of the transformer within one full-bridge switch period may be respectively sampled at the two midpoints.

As shown in FIG. 12, voltage sampling points may also be two ends of an additional winding of a main transformer. In this case, the bus voltage U1 in the case of the forward excitation of the transformer and the bus voltage U2 in the case of the inverse excitation of the transformer within one full-bridge switch period may be respectively sampled at the two ends.

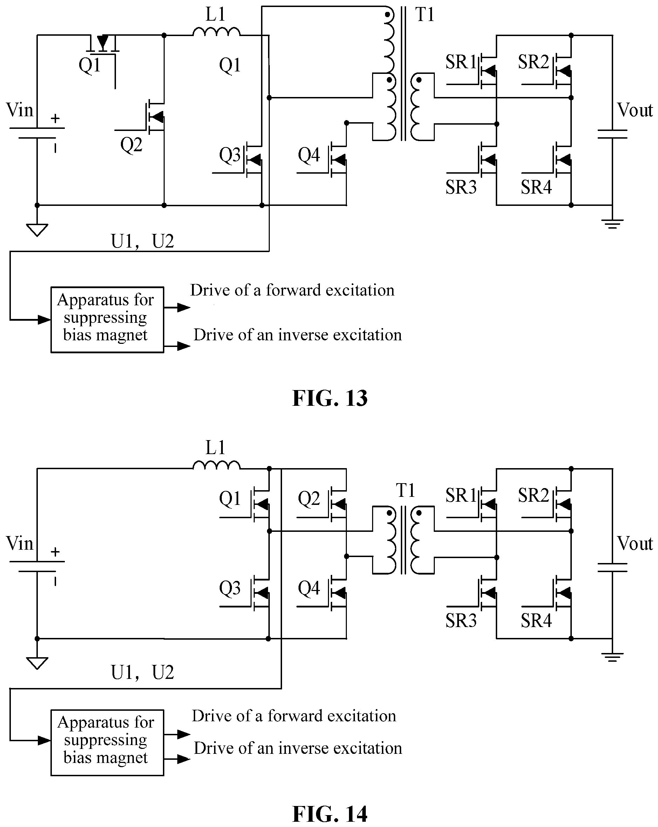

In the isolation BUCK-BOOST circuit in FIG. 1, the isolation BOOST circuit is of a full-bridge topology. In other embodiments, the isolation BOOST circuit may be of a push-pull topology. As shown in FIG. 13, the voltage sampling point is at a back end of the L1 and a midpoint of two primary-side coils of the transformer, and may be used for sampling the bus voltage U1 in the case of the forward excitation of the transformer and the bus voltage U2 in the case of the inverse excitation of the transformer within one period.

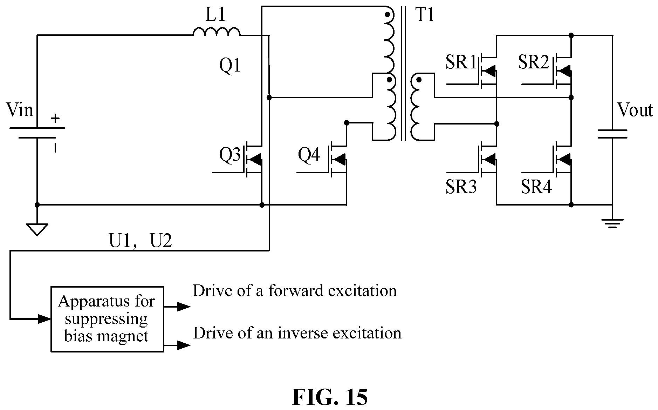

Additionally, this embodiment of the present application may be applied not only to the isolation BUCK-BOOST circuit, but also to the isolation BOOST circuit, as shown in FIGS. 14 and 15.

FIG. 14 is a schematic diagram of a sampling point for bus voltages of an isolation BUCK-BOOST circuit according to an application example of the present application. The voltage sampling point is at a back end of the L1 and the bus voltage U1 in the case of the forward excitation of the transformer and the bus voltage U2 in the case of the inverse excitation of the transformer within one switch period may be sampled by sampling a full-bridge bus of the isolation BOOST circuit. The main power circuit in FIG. 14 is a CURRENT FEED full-bridge circuit.

FIG. 15 is a schematic diagram of a sampling point for bus voltages of an isolation BUCK-BOOST circuit according to an application example of the present application. The voltage sampling point is at a back end of the L1 and a midpoint of two primary-side coils of the transformer, and may be used for sampling the bus voltage U1 in the case of the forward excitation of the transformer and the bus voltage U2 in the case of the inverse excitation of the transformer within one switch period. The main power circuit in FIG. 15 is a CURRENT FEED push-pull circuit.

It is to be noted that, for the same DC-DC converter, due to different sampling points or different parameters of the elements in the circuit, the parameters such as the first threshold value, the second threshold value, the maximum adjustment amount provided in the embodiments of the present application may be different; and for different DC-DC converters, due to different circuit structures or different parameters of elements, the parameters such as the first threshold value, the second threshold value, the maximum adjustment amount provided in the embodiments of the present application may be different, which is not limited in the embodiments of the present application.

An embodiment of the present application further provides a computer-readable storage medium. The storage medium stores computer-executable instructions. The computer-executable instructions are configured to perform the method for suppressing bias magnet described above.

In this embodiment, the above-mentioned storage medium may include, but is not limited to, a USB flash disk, a read-only memory (ROM), a random access memory (RAM), a mobile hard disk, a magnetic disk, an optical disk or another medium capable of storing program codes.

## Claims

1. A method for suppressing bias magnet, comprising:
acquiring (101) a bus voltage U1 in a case of a forward excitation of a transformer in a direct current-direct current, DC-DC, converter and a bus voltage U2 in a case of an inverse excitation of the transformer in the DC-DC converter;
determining (102) a bias magnet compensation amount Δd1 in the case of the forward excitation of the transformer and a bias magnet compensation amount Δd2 in the case of the inverse excitation of the transformer according to the bus voltage U1 in the case of the forward excitation and the bus voltage U2 in the case of the inverse excitation; and
adding (103) the bias magnet compensation amount Δd1 in the case of the forward excitation of the transformer and a loop-output duty cycle signal quantity of the DC-DC converter and outputting an adding result to a switch transistor in a forward excitation, and adding the bias magnet compensation amount Δd2 in the case of the inverse excitation of the transformer and the loop-output duty cycle signal quantity of the DC-DC converter and outputting an adding result to a switch transistor in an inverse excitation;
wherein the method is **characterized in that** determining the bias magnet compensation amount Δd1 in the case of the forward excitation of the transformer and the bias magnet compensation amount Δd2 in the case of the inverse excitation of the transformer according to the bus voltage U1 in the case of the forward excitation and the bus voltage U2 in the case of the inverse excitation comprises:
obtaining a voltage difference ΔU1 between the forward excitation of the transformer and the inverse excitation of the transformer according to the bus voltage U1 in the case of the forward excitation and the bus voltage U2 in the case of the inverse excitation;
determining a compensation information amount ΔU3 according to the voltage difference ΔU1 between the forward excitation of the transformer and the inverse excitation of the transformer; and
determining the bias magnet compensation amount Δd1 in the case of the forward excitation of the transformer and the bias magnet compensation amount Δd2 in the case of the inverse excitation of the transformer according to the compensation information amount ΔU3.

2. The method of claim 1, wherein acquiring the bus voltage U1 in the case of the forward excitation of the transformer and the bus voltage U2 in the case of the inverse excitation of the transformer is in one of:
sampling a full-bridge bus of an isolation BOOST circuit in the DC-DC converter;
sampling a midpoint of a primary-side full-bridge leg of an isolation BOOST circuit in the DC-DC converter;
sampling a midpoint of a secondary-side full-bridge leg of an isolation BOOST circuit in the DC-DC converter;
sampling two ends of an additional winding of the transformer in the DC-DC converter; or
sampling a midpoint of two primary-side coils of the transformer in the DC-DC converter.

3. The method of claim 1, wherein determining the compensation information amount ΔU3 according to the voltage difference ΔU1 between the forward excitation of the transformer and the inverse excitation of the transformer comprises:
performing at least one of amplification, filtering or clipping on the voltage difference ΔU1 between the forward excitation of the transformer and the inverse excitation of the transformer to obtain the compensation information amount ΔU3.

4. The method of claim 1, wherein determining the bias magnet compensation amount Δd1 in the case of the forward excitation of the transformer and the bias magnet compensation amount Δd2 in the case of the inverse excitation of the transformer according to the compensation information amount ΔU3 comprises:
decreasing the bias magnet compensation amount Δd2 in the case of the inverse excitation or increasing the bias magnet compensation amount Δd1 in the case of the forward excitation based on determining that the compensation information amount ΔU3 is less than or equal to a first threshold value and greater than a second threshold value;
decreasing the bias magnet compensation amount Δd1 in the case of the forward excitation or increasing the bias magnet compensation amount Δd2 in the case of the inverse excitation based on determining that the compensation information amount ΔU3 is greater than or equal to a negative first threshold value and less than a negative second threshold value;
keeping the bias magnet compensation amount Δd1 in the case of the forward excitation and the bias magnet compensation amount Δd2 in the case of the inverse excitation unchanged based on determining that an absolute value of the compensation information amount ΔU3 is less than or equal to the second threshold value; or
setting the bias magnet compensation amount Δd1 in the case of the forward excitation and the bias magnet compensation amount Δd2 in the case of the inverse excitation to specific values based on determining that an absolute value of the compensation information amount ΔU3 is greater than the first threshold value,
wherein the first threshold value is greater than the second threshold value.

5. The method of claim 4, further comprising:
outputting power abnormality alarm information based on determining that the absolute value of the compensation information amount ΔU3 is greater than the first threshold value.

6. The method of claim 4, wherein decreasing the bias magnet compensation amount Δd2 in the case of the inverse excitation based on determining that the compensation information amount ΔU3 is less than or equal to the first threshold value and greater than the second threshold value comprises:
based on determining that the compensation information amount ΔU3 is less than or equal to the first threshold value and greater than the second threshold value, and the bias magnet compensation amount Δd2 in the case of the inverse excitation is greater than 0 ns, setting the bias magnet compensation amount Δd1 in the case of the forward excitation to 0 ns, and setting the bias magnet compensation amount Δd2 in the case of the inverse excitation minus a compensation adjustment amount.

7. The method of claim 4, wherein increasing the bias magnet compensation amount Δd1 in the case of the forward excitation based on determining that the compensation information amount ΔU3 is less than or equal to the first threshold value and greater than the second threshold value comprises:
based on determining that the compensation information amount ΔU3 is less than or equal to the first threshold value and greater than the second threshold value, the bias magnet compensation amount Δd2 in the case of the inverse excitation is less than or equal to 0 ns, and the bias magnet compensation amount Δd1 in the case of the forward excitation is less than a maximum adjustment amount, setting the bias magnet compensation amount Δd1 in the case of the forward excitation plus a compensation adjustment amount, and setting the Δd2 to 0 ns.

8. The method of claim 4, wherein decreasing the bias magnet compensation amount Δd1 in the case of the forward excitation based on determining that the compensation information amount ΔU3 is greater than or equal to the negative first threshold value and less than the negative second threshold value comprises:
based on determining that the compensation information amount ΔU3 is greater than or equal to the negative first threshold value and less than the negative second threshold value, and the bias magnet compensation amount Δd1 in the case of the forward excitation is greater than 0 ns, setting the bias magnet compensation amount Δd1 in the case of the forward excitation minus a compensation adjustment amount, and setting the bias magnet compensation amount Δd2 in the case of the inverse excitation to 0 ns.

9. The method of claim 4, wherein increasing the bias magnet compensation amount Δd2 in the case of the inverse excitation based on determining that the compensation information amount ΔU3 is greater than or equal to the negative first threshold value and less than the negative second threshold value comprises:
based on determining that the compensation information amount ΔU3 is greater than or equal to the negative first threshold value and less than the negative second threshold value, the bias magnet compensation amount Δd1 in the case of the forward excitation is less than or equal to 0 ns, and the bias magnet compensation amount Δd2 in the case of the inverse excitation is less than a maximum adjustment amount, setting the bias magnet compensation amount Δd1 in the case of the forward excitation to 0 ns, and setting the bias magnet compensation amount Δd2 in the case of the inverse excitation plus a compensation adjustment amount.

10. An apparatus for suppressing bias magnet, comprising:
a bus-voltage acquisition unit, configured to acquire a bus voltage U1 in a case of a forward excitation of a transformer in a direct current-direct current, DC-DC, converter and a bus voltage U2 in a case of an inverse excitation of the transformer in the DC-DC converter;
a processing unit, configured to determine a bias magnet compensation amount Δd1 in the case of the forward excitation of the transformer and a bias magnet compensation amount Δd2 in the case of the inverse excitation of the transformer according to the bus voltage U1 in the case of the forward excitation and the bus voltage U2 in the case of the inverse excitation; and
a bias magnet suppression unit, configured to add the bias magnet compensation amount Δd1 in the case of the forward excitation of the transformer and a loop-output duty cycle signal quantity of the DC-DC converter and output an adding result to a switch transistor in a forward excitation, and add the bias magnet compensation amount Δd2 in the case of the inverse excitation of the transformer and the loop-output duty cycle signal quantity of the DC-DC converter and output an adding result to a switch transistor in an inverse excitation;
wherein the apparatus is **characterized in that** the processing unit is configured to:
obtain a voltage difference ΔU1 between the forward excitation of the transformer and the inverse excitation of the transformer according to the bus voltage U1 in the case of the forward excitation and the bus voltage U2 in the case of the inverse excitation;
determine a compensation information amount ΔU3 according to the voltage difference ΔU1 between the forward excitation of the transformer and the inverse excitation of the transformer; and
determine the bias magnet compensation amount Δd1 in the case of the forward excitation of the transformer and the bias magnet compensation amount Δd2 in the case of the inverse excitation of the transformer according to the compensation information amount ΔU3.

11. The apparatus of claim 10, wherein the bus-voltage acquisition unit is configured to acquire the bus voltage U1 in the case of the forward excitation of the transformer and the bus voltage U2 in the case of the inverse excitation of the transformer by one of:
sampling a full-bridge bus of an isolation BOOST circuit in the DC-DC converter;
sampling a midpoint of a primary-side full-bridge leg of an isolation BOOST circuit in the DC-DC converter;
sampling a midpoint of a secondary-side full-bridge leg of an isolation BOOST circuit in the DC-DC converter;
sampling two ends of an additional winding of the transformer in the DC-DC converter; or
sampling a midpoint of two primary-side coils of the transformer in the DC-DC converter.

12. A computer-readable storage medium, **characterized by** storing computer-executable instructions, wherein the computer-executable instructions are configured to perform the method for suppressing bias magnet of any one of claims 1 to 9 and executable by the apparatus according to claims 10 and 11.

## Patentansprüche

1. Verfahren zum Unterdrücken einer Vormagnetisierung, das Folgendes umfasst:
Erfassen (101) einer Busspannung U1 in einem Falle einer Vorwärtserregung eines Transformators in einem Gleichstrom-Gleichstrom(DC-DC)-Wandler und einer Busspannung U2 in einem Fall einer umgekehrten Erregung des Transformators im DC-DC-Wandler;
Bestimmen (102) eines Vormagnetisierungskompensationsbetrags Δd1 im Fall der Vorwärtserregung des Transformators und eines Vormagnetisierungskompensationsbetrags Δd2 im Fall der umgekehrten Erregung des Transformators gemäß der Busspannung U1 im Fall der Vorwärtserregung und der Busspannung U2 im Fall der umgekehrten Erregung; und
Addieren (103) des Vormagnetisierungskompensationsbetrags Δd1 im Fall der Vorwärtserregung des Transformators und einer Schleifenausgangtastgradsignalmenge des DC-DC-Wandlers und Ausgeben eines Additionsergebnisses an einen Schalttransistor bei einer Vorwärtserregung und Addieren des Vormagnetisierungskompensationsbetrags Δd2 im Fall der umgekehrten Erregung des Transformators und der Schleifenausgangtastgradsignalmenge des DC-DC-Wandlers und Ausgeben eines Additionsergebnisses an einen Schalttransistor bei einer umgekehrten Erregung;
wobei das Verfahren **dadurch gekennzeichnet ist, dass** das Bestimmen des Vormagnetisierungskompensationsbetrags Δd1 im Fall der Vorwärtserregung des Transformators und des Vormagnetisierungskompensationsbetrags Δd2 im Fall der umgekehrten Erregung des Transformators gemäß der Busspannung U1 im Fall der Vorwärtserregung und der Busspannung U2 im Fall der umgekehrten Erregung Folgendes umfasst:
Erhalten einer Spannungsdifferenz ΔU1 zwischen der Vorwärtserregung des Transformators und der umgekehrten Erregung des Transformators gemäß der Busspannung U1 im Fall der Vorwärtserregung und der Busspannung U2 im Fall der umgekehrten Erregung;
Bestimmen eines Kompensationsinformationsbetrags ΔU3 gemäß der Spannungsdifferenz ΔU1 zwischen der Vorwärtserregung des Transformators und der umgekehrten Erregung des Transformators; und
Bestimmen des Vormagnetisierungskompensationsbetrags Δd1 im Fall der Vorwärtserregung des Transformators und des Vormagnetisierungskompensationsbetrags Δd2 im Fall der umgekehrten Erregung des Transformators gemäß dem Kompensationsinformationsbetrag ΔU3.

2. Verfahren nach Anspruch 1, wobei das Erfassen der Busspannung U1 im Fall der Vorwärtserregung des Transformators und der Busspannung U2 im Fall der umgekehrten Erregung des Transformators eines von Folgendem ist:
Abtasten eines Vollbrückenbusses einer BOOST-Isolationsschaltung im DC-DC-Wandler;
Abtasten eines Mittelpunkts eines primärseitigen Vollbrückenzweigs einer BOOST-Isolationsschaltung im DC-DC-Wandler;
Abtasten eines Mittelpunkts eines sekundärseitigen Vollbrückenzweigs einer BOOST-Isolationsschaltung im DC-DC-Wandler;
Abtasten von zwei Enden einer zusätzlichen Wicklung des Transformators im DC-DC-Wandler; oder
Abtasten eines Mittelpunkts von zwei primärseitigen Spulen des Transformators im DC-DC-Wandler.

3. Verfahren nach Anspruch 1, wobei das Bestimmen des Kompensationsinformationsbetrags ΔU3 gemäß der Spannungsdifferenz ΔU1 zwischen der Vorwärtserregung des Transformators und der umgekehrten Erregung des Transformators Folgendes umfasst:
Durchführen von mindestens einem einer Verstärkung, einer Filterung oder einer Beschneidung der Spannungsdifferenz ΔU1 zwischen der Vorwärtserregung des Transformators und der umgekehrten Erregung des Transformators, um den Kompensationsinformationsbetrag ΔU3 zu erhalten.

4. Verfahren nach Anspruch 1, wobei das Bestimmen des Vormagnetisierungskompensationsbetrags Δd1 im Fall der Vorwärtserregung des Transformators und des Vormagnetisierungskompensationsbetrags Δd2 im Fall der umgekehrten Erregung des Transformators gemäß dem Kompensationsinformationsbetrag ΔU3 Folgendes umfasst:
Verringern des Vormagnetisierungskompensationsbetrags Δd2 im Fall der umgekehrten Erregung bzw. Erhöhen des Vormagnetisierungskompensationsbetrags Δd1 im Fall der Vorwärtserregung auf Basis des Bestimmens, dass der Kompensationsinformationsbetrag ΔU3 kleiner als oder gleich einem ersten Schwellwert und größer als ein zweiter Schwellwert ist;
Verringern des Vormagnetisierungskompensationsbetrags Δd1 im Fall der Vorwärtserregung bzw. Erhöhen des Vormagnetisierungskompensationsbetrags Δd2 im Fall der umgekehrten Erregung auf Basis des Bestimmens, dass der Kompensationsinformationsbetrag ΔU3 größer als oder gleich einem negativen ersten Schwellwert und kleiner als ein negativer zweiter Schwellwert ist;
Unverändertlassen des Vormagnetisierungskompensationsbetrags Δd1 im Fall der Vorwärtserregung und des Vormagnetisierungskompensationsbetrags Δd2 im Fall der umgekehrten Erregung auf Basis des Bestimmens, dass ein Absolutwert des Kompensationsinformationsbetrags ΔU3 kleiner als oder gleich dem zweiten Schwellwert ist; oder
Einstellen des Vormagnetisierungskompensationsbetrags Δd1 im Fall der Vorwärtserregung und des Vormagnetisierungskompensationsbetrags Δd2 im Fall der umgekehrten Erregung auf Basis des Bestimmens, dass ein Absolutwert des Kompensationsinformationsbetrags ΔU3 größer als der erste Schwellwert ist, auf spezifische Werte,
wobei der erste Schwellwert größer ist als der zweite Schwellwert.

5. Verfahren nach Anspruch 4, das ferner Folgendes umfasst:
Ausgeben von Leistungsunnormalitätsalarminformationen auf Basis des Bestimmens, dass der Absolutwert des Kompensationsinformationsbetrags ΔU3 größer ist als der erste Schwellwert.

6. Verfahren nach Anspruch 4, wobei das Verringern des Vormagnetisierungskompensationsbetrags Δd2 im Fall der umgekehrten Erregung auf Basis des Bestimmens, dass der Kompensationsinformationsbetrag ΔU3 kleiner als oder gleich dem ersten Schwellwert und größer als der zweite Schwellwert ist, Folgendes umfasst:
auf Basis des Bestimmens, dass der Kompensationsinformationsbetrag ΔU3 kleiner als oder gleich dem ersten Schwellwert und größer als der zweite Schwellwert ist, und der Vormagnetisierungskompensationsbetrag Δd2 im Fall der umgekehrten Erregung größer als 0 ns ist, Einstellen des Vormagnetisierungskompensationsbetrags Δd1 im Fall der Vorwärtserregung auf 0 ns und Einstellen des Vormagnetisierungskompensationsbetrags Δd2 im Fall der umgekehrten Erregung minus einem Kompensationsanpassungsbetrag.

7. Verfahren nach Anspruch 4, wobei das Erhöhen des Vormagnetisierungskompensationsbetrags Δd1 im Fall der Vorwärtserregung auf Basis des Bestimmens, dass der Kompensationsinformationsbetrag ΔU3 kleiner als oder gleich dem ersten Schwellwert und größer als der zweite Schwellwert ist, Folgendes umfasst:
auf Basis des Bestimmens, dass der Kompensationsinformationsbetrag ΔU3 kleiner als oder gleich dem ersten Schwellwert und größer als der zweite Schwellwert ist, der Vormagnetisierungskompensationsbetrag Δd2 im Fall der umgekehrten Erregung kleiner als oder gleich 0 ns ist, und der Vormagnetisierungskompensationsbetrag Δd1 im Fall der Vorwärtserregung kleiner als ein maximaler Anpassungsbetrag ist, Einstellen des Vormagnetisierungskompensationsbetrags Δd1 im Fall der Vorwärtserregung plus einem Kompensationsanpassungsbetrag und Einstellen des Δd2 auf 0 ns.

8. Verfahren nach Anspruch 4, wobei das Verringern des Vormagnetisierungskompensationsbetrags Δd1 im Fall der Vorwärtserregung auf Basis des Bestimmens, dass der Kompensationsinformationsbetrag ΔU3 größer als oder gleich dem negativen ersten Schwellwert und kleiner als der negative zweite Schwellwert ist, Folgendes umfasst:
auf Basis des Bestimmens, dass der Kompensationsinformationsbetrag ΔU3 größer als oder gleich dem negativen ersten Schwellwert und kleiner als der negative zweite Schwellwert ist, und der Vormagnetisierungskompensationsbetrag Δd1 im Fall der Vorwärtserregung größer als 0 ns ist, Einstellen des Vormagnetisierungskompensationsbetrags Δd1 im Fall der Vorwärtserregung minus einem Kompensationsanpassungsbetrag und Einstellen des Vormagnetisierungskompensationsbetrags Δd2 im Fall der umgekehrten Erregung auf 0 ns.

9. Verfahren nach Anspruch 4, wobei das Erhöhen des Vormagnetisierungskompensationsbetrags Δd2 im Fall der umgekehrten Erregung auf Basis des Bestimmens, dass der Kompensationsinformationsbetrag ΔU3 größer als oder gleich dem negativen ersten Schwellwert und kleiner als der negative zweite Schwellwert ist, Folgendes umfasst:
auf Basis des Bestimmens, dass der Kompensationsinformationsbetrag ΔU3 größer als oder gleich dem negativen ersten Schwellwert und kleiner als der negative zweite Schwellwert ist, der Vormagnetisierungskompensationsbetrag Δd1 im Fall der Vorwärtserregung kleiner als oder gleich 0 ns ist, und der Vormagnetisierungskompensationsbetrag Δd2 im Fall der umgekehrten Erregung kleiner als ein maximaler Anpassungsbetrag ist, Einstellen des Vormagnetisierungskompensationsbetrags Δd1 im Fall der Vorwärtserregung auf 0 ns und Einstellen des Vormagnetisierungskompensationsbetrags Δd2 im Fall der umgekehrten Erregung plus einem Kompensationsanpassungsbetrag.

10. Vorrichtung zum Unterdrücken einer Vormagnetisierung, die Folgendes umfasst:
eine Busspannungserfassungseinheit, die dazu ausgelegt ist, eine Busspannung U1 in einem Falle einer Vorwärtserregung eines Transformators in einem Gleichstrom-Gleichstrom(DC-DC)-Wandler und eine Busspannung U2 in einem Fall einer umgekehrten Erregung des Transformators im DC-DC-Wandler zu erfassen;
eine Verarbeitungseinheit, die dazu ausgelegt ist, einen Vormagnetisierungskompensationsbetrag Δd1 im Fall der Vorwärtserregung des Transformators und einen Vormagnetisierungskompensationsbetrag Δd2 im Fall der umgekehrten Erregung des Transformators gemäß der Busspannung U1 im Fall der Vorwärtserregung und der Busspannung U2 im Fall der umgekehrten Erregung zu bestimmen; und
eine Vormagnetisierungsunterdrückungseinheit, die dazu ausgelegt ist, den Vormagnetisierungskompensationsbetrag Δd1 im Fall der Vorwärtserregung des Transformators und eine Schleifenausgangtastgradsignalmenge des DC-DC-Wandlers zu addieren und ein Additionsergebnis an einen Schalttransistor bei einer Vorwärtserregung auszugeben und den Vormagnetisierungskompensationsbetrag Δd2 im Fall der umgekehrten Erregung des Transformators und die Schleifenausgangtastgradsignalmenge des DC-DC-Wandlers zu addieren und ein Additionsergebnis an einen Schalttransistor bei einer umgekehrten Erregung auszugeben;
wobei die Vorrichtung **dadurch gekennzeichnet ist, dass** die Verarbeitungseinheit zu Folgendem ausgelegt ist:
Erhalten einer Spannungsdifferenz ΔU1 zwischen der Vorwärtserregung des Transformators und der umgekehrten Erregung des Transformators gemäß der Busspannung U1 im Fall der Vorwärtserregung und der Busspannung U2 im Fall der umgekehrten Erregung;
Bestimmen eines Kompensationsinformationsbetrags ΔU3 gemäß der Spannungsdifferenz ΔU1 zwischen der Vorwärtserregung des Transformators und der umgekehrten Erregung des Transformators; und
Bestimmen des Vormagnetisierungskompensationsbetrags Δd1 im Fall der Vorwärtserregung des Transformators und des Vormagnetisierungskompensationsbetrags Δd2 im Fall der umgekehrten Erregung des Transformators gemäß dem Kompensationsinformationsbetrag ΔU3.

11. Vorrichtung nach Anspruch 10, wobei die Busspannungserfassungseinheit dazu ausgelegt ist, die Busspannung U1 im Fall der Vorwärtserregung des Transformators und die Busspannung U2 im Fall der umgekehrten Erregung des Transformators durch eines von Folgendem zu erfassen:
Abtasten eines Vollbrückenbusses einer BOOST-Isolationsschaltung im DC-DC-Wandler;
Abtasten eines Mittelpunkts eines primärseitigen Vollbrückenzweigs einer BOOST-Isolationsschaltung im DC-DC-Wandler;
Abtasten eines Mittelpunkts eines sekundärseitigen Vollbrückenzweigs einer BOOST-Isolationsschaltung im DC-DC-Wandler;
Abtasten von zwei Enden einer zusätzlichen Wicklung des Transformators im DC-DC-Wandler; oder
Abtasten eines Mittelpunkts von zwei primärseitigen Spulen des Transformators im DC-DC-Wandler.

12. Computerlesbares Speichermedium, das durch Speichern von computerausführbaren Anweisungen gekennzeichnet ist, wobei die computerausführbaren Anweisungen dazu ausgelegt sind, das Verfahren zum Unterdrücken einer Vormagnetisierung nach einem der Ansprüche 1 bis 9 durchzuführen, und das von der Vorrichtung gemäß Anspruch 10 und 11 ausführbar ist.

## Revendications

1. Méthode de suppression de l'aimant de polarisation, comprenant :
acquérir (101) une tension de bus U1 dans le cas d'une excitation directe d'un transformateur dans un convertisseur courant continu-courant continu, et une tension de bus U2 dans le cas d'une excitation inverse du transformateur dans le convertisseur courant continu-courant continu ;
déterminer (102) un montant de compensation de l'aimant de polarisation Δd1 dans le cas de l'excitation directe du transformateur et un montant de compensation de l'aimant de polarisation Δd2 dans le cas de l'excitation inverse du transformateur en fonction de la tension de bus U1 dans le cas de l'excitation directe et de la tension de bus U2 dans le cas de l'excitation inverse ; et
ajouter (103) le montant de compensation de l'aimant de polarisation Δd1 dans le cas de l'excitation directe du transformateur et d'une quantité de signal de cycle de service de sortie de boucle du convertisseur CC-CD et transmettre un résultat d'addition à un transistor de commutation dans une excitation directe, et ajouter le montant de compensation de l'aimant de polarisation Δd2 dans le cas de l'excitation inverse du transformateur et de la quantité de signal de cycle de service de sortie de boucle du convertisseur CC-CD et transmettre un résultat d'addition à un transistor de commutation dans une excitation inverse ;
dans lequel le procédé est **caractérisé en ce que** la détermination du montant de compensation de l'aimant de polarisation Δd1 dans le cas de l'excitation directe du transformateur et du montant de compensation de l'aimant de polarisation Δd2 dans le cas de l'excitation inverse du transformateur en fonction de la tension de bus U1 dans le cas de l'excitation directe et de la tension de bus U2 dans le cas de l'excitation inverse comprend :
obtenir une différence de tension ΔU1 entre l'excitation directe du transformateur et l'excitation inverse du transformateur en fonction de la tension de bus U1 dans le cas de l'excitation directe et de la tension de bus U2 dans le cas de l'excitation inverse ;
déterminer une quantité d'informations de compensation ΔU3 en fonction de la différence de tension ΔU1 entre l'excitation directe du transformateur et l'excitation inverse du transformateur ; et
déterminer le montant de compensation de l'aimant de polarisation Δd1 dans le cas de l'excitation directe du transformateur et le montant de compensation de l'aimant de polarisation Δd2 dans le cas de l'excitation inverse du transformateur en fonction du montant de l'information de compensation ΔU3.

2. Méthode de la revendication 1, dans laquelle l'acquisition de la tension de bus U1 dans le cas de l'excitation directe du transformateur et de la tension de bus U2 dans le cas de l'excitation inverse du transformateur s'effectue dans l'une des situations suivantes :
échantillonnage d'un bus en pont complet d'un circuit BOOST d'isolation dans le convertisseur DC-DC ;
échantillonnage d'un point médian d'une branche de pont complet côté primaire d'un circuit d'isolation BOOST dans le convertisseur DC-DC ;
échantillonnage d'un point médian d'une branche de pont complet du côté secondaire d'un circuit d'isolation BOOST dans le convertisseur DC-DC ;
échantillonner les deux extrémités d'un enroulement supplémentaire du transformateur dans le convertisseur CC-CC ; ou
échantillonnage d'un point médian de deux bobines côté primaire du transformateur dans le convertisseur DC-DC.

3. Le procédé de la revendication 1, dans lequel la détermination de la quantité d'information de compensation ΔU3 en fonction de la différence de tension ΔU1 entre l'excitation directe du transformateur et l'excitation inverse du transformateur comprend :
effectuer au moins l'une des opérations suivantes : amplification, filtrage ou écrêtage sur la différence de tension ΔU1 entre l'excitation directe du transformateur et l'excitation inverse du transformateur afin d'obtenir la quantité d'informations de compensation ΔU3.

4. Le procédé de la revendication 1, dans lequel la détermination de la quantité de compensation de l'aimant de polarisation Δd1 dans le cas de l'excitation directe du transformateur et de la quantité de compensation de l'aimant de polarisation Δd2 dans le cas de l'excitation inverse du transformateur en fonction de la quantité d'information de compensation ΔU3 comprend :
diminuer le montant de compensation de l'aimant de polarisation Δd2 dans le cas de l'excitation inverse ou augmenter le montant de compensation de l'aimant de polarisation Δd1 dans le cas de l'excitation directe, en déterminant que le montant de l'information de compensation ΔU3 est inférieur ou égal à une première valeur seuil et supérieur à une deuxième valeur seuil ;
diminuer le montant de compensation de l'aimant de polarisation Δd1 dans le cas de l'excitation directe ou augmenter le montant de compensation de l'aimant de polarisation Δd2 dans le cas de l'excitation inverse, en déterminant que le montant de l'information de compensation ΔU3 est supérieur ou égal à une première valeur seuil négative et inférieur à une deuxième valeur seuil négative ;
maintenir inchangé le montant de compensation de l'aimant de polarisation Δd1 dans le cas de l'excitation directe et le montant de compensation de l'aimant de polarisation Δd2 dans le cas de l'excitation inverse, en déterminant qu'une valeur absolue du montant de l'information de compensation ΔU3 est inférieure ou égale à la deuxième valeur seuil ; ou
régler le montant de compensation de l'aimant de polarisation Δd1 dans le cas de l'excitation directe et le montant de compensation de l'aimant de polarisation Δd2 dans le cas de l'excitation inverse à des valeurs spécifiques sur la base de la détermination qu'une valeur absolue du montant de l'information de compensation ΔU3 est supérieure à la première valeur de seuil,
dans lequel la première valeur seuil est supérieure à la deuxième valeur seuil.

5. La méthode de la revendication 4, comprenant en outre :
émettre une information d'alarme d'anomalie de puissance en déterminant que la valeur absolue de la quantité d'information de compensation ΔU3 est supérieure à la première valeur seuil.

6. Le procédé de la revendication 4, dans lequel la diminution de la quantité de compensation de l'aimant de polarisation Δd2 dans le cas de l'excitation inverse basée sur la détermination que la quantité d'information de compensation ΔU3 est inférieure ou égale à la première valeur de seuil et supérieure à la deuxième valeur de seuil comprend :
après avoir déterminé que la quantité d'informations de compensation ΔU3 est inférieure ou égale à la première valeur seuil et supérieure à la deuxième valeur seuil, et que la quantité de compensation de l'aimant de polarisation Δd2 dans le cas de l'excitation inverse est supérieure à 0 ns, régler la quantité de compensation de l'aimant de polarisation Δd1 dans le cas de l'excitation directe à 0 ns, et régler la quantité de compensation de l'aimant de polarisation Δd2 dans le cas de l'excitation inverse moins une quantité d'ajustement de la compensation.

7. Le procédé de la revendication 4, dans lequel l'augmentation de la quantité de compensation de l'aimant de polarisation Δd1 dans le cas de l'excitation avant basée sur la détermination que la quantité d'information de compensation ΔU3 est inférieure ou égale à la première valeur de seuil et supérieure à la deuxième valeur de seuil comprend :
sur la base de la détermination que la quantité d'informations de compensation ΔU3 est inférieure ou égale à la première valeur seuil et supérieure à la deuxième valeur seuil, la quantité de compensation de l'aimant de polarisation Δd2 dans le cas de l'excitation inverse est inférieure ou égale à 0 ns, et le montant de compensation de l'aimant de polarisation Δd1 dans le cas de l'excitation directe est inférieur à un montant de réglage maximal, en réglant le montant de compensation de l'aimant de polarisation Δd1 dans le cas de l'excitation directe plus un montant de réglage de compensation, et en réglant le Δd2 sur 0 ns.

8. Le procédé de la revendication 4, dans lequel la diminution de la quantité de compensation de l'aimant de polarisation Δd1 dans le cas de l'excitation avant basée sur la détermination que la quantité d'information de compensation ΔU3 est supérieure ou égale à la première valeur de seuil négative et inférieure à la deuxième valeur de seuil négative comprend :
après avoir déterminé que la quantité d'informations de compensation ΔU3 est supérieure ou égale à la première valeur seuil négative et inférieure à la deuxième valeur seuil négative, et que la quantité de compensation de l'aimant de polarisation Δd1 dans le cas de l'excitation avant est supérieure à 0 ns, régler la quantité de compensation de l'aimant de polarisation Δd1 dans le cas de l'excitation avant moins une quantité d'ajustement de la compensation, et régler la quantité de compensation de l'aimant de polarisation Δd2 dans le cas de l'excitation inverse à 0 ns.

9. Le procédé de la revendication 4, dans lequel l'augmentation de la quantité de compensation de l'aimant de polarisation Δd2 dans le cas de l'excitation inverse basée sur la détermination que la quantité d'information de compensation ΔU3 est supérieure ou égale à la première valeur seuil négative et inférieure à la deuxième valeur seuil négative comprend :
sur la base de la détermination que la quantité d'informations de compensation ΔU3 est supérieure ou égale à la première valeur seuil négative et inférieure à la deuxième valeur seuil négative, la quantité de compensation de l'aimant de polarisation Δd1 dans le cas de l'excitation directe est inférieure ou égale à 0 ns, et le montant de compensation de l'aimant de polarisation Δd2 dans le cas de l'excitation inverse est inférieur à un montant de réglage maximal, en réglant le montant de compensation de l'aimant de polarisation Δd1 dans le cas de l'excitation directe à 0 ns, et en réglant le montant de compensation de l'aimant de polarisation Δd2 dans le cas de l'excitation inverse plus un montant de réglage de la compensation.

10. Un appareil pour supprimer l'aimant de polarisation, comprenant :
une unité d'acquisition de tension de bus, configurée pour acquérir une tension de bus U1 dans le cas d'une excitation directe d'un transformateur dans un convertisseur courant continu-courant continu (CC-CC) et une tension de bus U2 dans le cas d'une excitation inverse du transformateur dans le convertisseur CC-CC ;
une unité de traitement, configurée pour déterminer un montant de compensation de l'aimant de polarisation Δd1 dans le cas de l'excitation directe du transformateur et un montant de compensation de l'aimant de polarisation Δd2 dans le cas de l'excitation inverse du transformateur en fonction de la tension de bus U1 dans le cas de l'excitation directe et de la tension de bus U2 dans le cas de l'excitation inverse ; et
une unité de suppression de l'aimant de polarisation, configurée pour ajouter le montant de compensation de l'aimant de polarisation Δd1 dans le cas de l'excitation directe du transformateur et d'une quantité de signal de cycle de service de sortie de boucle du convertisseur CC-CD et pour transmettre un résultat d'addition à un transistor de commutation dans une excitation directe, et pour ajouter le montant de compensation de l'aimant de polarisation Δd2 dans le cas de l'excitation inverse du transformateur et de la quantité de signal de cycle de service de sortie de boucle du convertisseur CC-CD et pour transmettre un résultat d'addition à un transistor de commutation dans une excitation inverse ;
L'appareil est **caractérisé par le fait que** l'unité de traitement est configurée pour :
obtenir une différence de tension ΔU1 entre l'excitation directe du transformateur et l'excitation inverse du transformateur en fonction de la tension de bus U1 dans le cas de l'excitation directe et de la tension de bus U2 dans le cas de l'excitation inverse ;
déterminer une quantité d'informations de compensation ΔU3 en fonction de la différence de tension ΔU1 entre l'excitation directe du transformateur et l'excitation inverse du transformateur ; et
déterminer le montant de compensation de l'aimant de polarisation Δd1 dans le cas de l'excitation directe du transformateur et le montant de compensation de l'aimant de polarisation Δd2 dans le cas de l'excitation inverse du transformateur en fonction du montant de l'information de compensation ΔU3.

11. L'appareil de la revendication 10, dans lequel l'unité d'acquisition de tension de bus est configurée pour acquérir la tension de bus U1 dans le cas de l'excitation directe du transformateur et la tension de bus U2 dans le cas de l'excitation inverse du transformateur par l'une des méthodes suivantes :
échantillonnage d'un bus en pont complet d'un circuit BOOST d'isolation dans le convertisseur DC-DC ;
échantillonnage d'un point médian d'une branche de pont complet côté primaire d'un circuit d'isolation BOOST dans le convertisseur DC-DC ;
échantillonnage d'un point médian d'une branche de pont complet du côté secondaire d'un circuit d'isolation BOOST dans le convertisseur DC-DC ;
échantillonner les deux extrémités d'un enroulement supplémentaire du transformateur dans le convertisseur CC-CC ; ou
échantillonnage d'un point médian de deux bobines côté primaire du transformateur dans le convertisseur DC-DC.

12. Support de stockage lisible par ordinateur, **caractérisé par** le stockage d'instructions exécutables par ordinateur, dans lequel les instructions exécutables par ordinateur sont configurées pour exécuter la méthode de suppression de l'aimant de polarisation de l'une des revendications 1 à 9 et exécutables par l'appareil selon les revendications 10 et 11.
